(19) **Europäisches Patentamt European Patent Office Office européen des brevets**

(11) **EP 4 787 839 A1**

(12) **EUROPEAN PATENT APPLICATION**

(43) Date of publication:
05.08.2026 Bulletin 2026/32

(21) Application number: 25305151.0

(22) Date of filing: 03.02.2025

(51) International Patent Classification (IPC):
H04N 19/126 (2014.01)     H04N 19/176 (2014.01)
H04N 19/18 (2014.01)     H04N 19/61 (2014.01)
H04N 19/82 (2014.01)

(52) Cooperative Patent Classification (CPC):
H04N 19/126; H04N 19/176; H04N 19/18;
H04N 19/61; H04N 19/82

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: InterDigital CE Patent Holdings, SAS
75017 Paris (FR)
(72) Inventors:
• LE PENDU, Mikael
35700 RENNES (FR)
• BALCILAR, Muhammet
35830 BETTON (FR)
• LO BIANCO, Federico
35700 RENNES (FR)

(74) Representative: Interdigital
Immeuble ZEN 2
845 A, avenue des Champs Blancs
35510 Cesson-Sévigné (FR)

(54) **INTERACTION OF QUANTIZATION CONSTRAINED CORRECTION WITH DEPENDENT QUANTIZATION**

(57) A method and apparatus for Quantization constrained correction with dependent quantization are provided. In some embodiments, a reconstructed image block is determined from a prediction block and a reconstructed prediction residual, and a filtered version of the reconstructed image block is obtained. A quantization index of the dependent quantization is obtained for at least one transform coefficient of a transform block determined for a residual obtained from the filtered reconstructed image block. At least one correction bound is determined based on the quantization index, a bound offset and a quantization step size of the dependent quantization, and the at least one transform coefficient is corrected as a function of the at least one correction bound providing at least one corrected transform coefficient.

1500

| Obtaining filtered reconstructed image block | 1510 |
| Obtaining quantization index for a transform coefficient | 1520 |
| Determining correction bound for the transform coefficient | 1530 |
| Correcting the transform coefficient | 1540 |

**FIG. 15**

**Description**

**BACKGROUND**

The present application is related to video compression. The present embodiments relate to a method and an apparatus for encoding or decoding an image or a video. More particularly, the present embodiments relate to quantization constrained correction with dependent quantization. To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. In inter prediction, motion vectors used in motion compensation are often predicted from motion vector predictor. To reconstruct the video, the compressed data are decoded by inverse processes corresponding to the entropy coding, quantization, transform, and prediction.

**BRIEF SUMMARY**

Briefly stated, in one embodiment, a method for Quantization Constrained correction is provided, the method comprises obtaining a filtered version of a reconstructed image block determined from a prediction block and a reconstructed prediction residual; obtaining a quantization index of a dependent quantization for at least one transform coefficient of a transform block determined for a residual obtained from the filtered reconstructed image block, determining at least one correction bound based on the quantization index, a bound offset and a quantization step size of the dependent quantization, and correcting the at least one transform coefficient as a function of the at least one correction bound providing at least one corrected transform coefficient.

In a variant, the residual is obtained between the filtered reconstructed image block and the prediction block. In another variant, the residual is obtained between the filtered reconstructed image block and the reconstructed image block.

In a variant, at least one of the bound offset or the quantization step size is obtained using integer parameters.

In a variant, the quantization index is a symmetrized quantization index associated with an absolute value of the decoded quantization level, and correcting the at least one transform coefficient as a function of the at least one correction bound comprising obtaining a symmetrized coefficient from the at least one transform coefficient and correcting the symmetrized coefficient as a function of the at least one correction bound.

In one embodiment, an apparatus for Quantization Constrained correction is provided, the apparatus comprises one or more processors configured to obtain a filtered version of a reconstructed image block determined from a prediction block and a reconstructed prediction residual; obtain a quantization index of a dependent quantization for at least one transform coefficient of a transform block determined for a residual obtained from the filtered reconstructed image block, determine at least one correction bound based on the quantization index, a bound offset and a quantization step size of the dependent quantization, and correct the at least one transform coefficient as a function of the at least one correction bound providing at least one corrected transform coefficient.

One or more embodiments also provide a method for encoding or decoding an image or a video that comprises the method steps of the method for Quantization Constrained correction mentioned above according to any one of the embodiments described herein.

One or more embodiments also provide an apparatus comprising one or more processors configured to implement the method for encoding or decoding an image or a video according to any one of the embodiments described herein.

One or more embodiments also provide a computer program comprising instructions which when executed by one or more processors cause the one or more processors to perform any one of the methods for encoding or decoding a video according to any of the embodiments described herein. One or more of the present embodiments also provide a non-transitory computer readable medium and/or a computer readable storage medium having stored thereon instructions for encoding or decoding a video according to the methods described herein.

One or more embodiments also provide a computer readable storage medium having stored thereon a bitstream generated according to the methods described herein. One or more embodiments also provide a method and apparatus for transmitting or receiving the bitstream generated according to the methods described above.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a block diagram illustrating an example system according to one or more embodiments of the present disclosure;

FIG. 2 is a block diagram illustrating an example video encoder according to one or more embodiments of the present disclosure;

FIG. 3 is a block diagram illustrating an example video decoder according to one or more embodiments of the present disclosure;

FIG. 4 illustrates an example of quantization and dequantization of a transform coefficient c;

FIG. 5 illustrates an example of quantization bounds and reconstruction values;

FIG. 6 illustrates an example of reconstruction of an image block with filtering;

FIG. 7 illustrates an example of quantization-constrained correction;

FIG.8 illustrates an example of a projection function onto the quantization constraint;

FIG. 9 illustrates an example of a smooth correction function;

FIG. 10 illustrates an example an alternative quantization-constrained correction computation using a non-filtered reconstructed image block $X_r$;

FIG. 11 illustrates an example of correction of a transform coefficient $c_f$ associated with a quantification level $c_q$;

FIG. 12 illustrates an example of correction of a transform coefficient $c_f$ associated with a quantification level $c_q$ using a symmetrized coefficients $c_f^{sym}$ associated with $abs(c_q)$;

FIG. 13 illustrates an example of dependent quantization with two quantizers Q0 and Q1;

FIG. 14 illustrates an example of state transition and quantizer selection for the dependent quantization;

FIG. 15 illustrates an example of a method for quantization-constrained correction of a block quantized with dependent quantization DepQuant, according to an embodiment;

FIG. 16 illustrates an example of a method for quantization-constrained correction of a block quantized with dependent quantization DepQuant, according to another embodiment;

FIG. 17 illustrates an example of quantization steps of different quantizers;

FIG. 18 illustrates an example of a method for determining adapted correction bound for DepQuant quantizers for a bound offset o in the range [-1;1], according to an embodiment;

FIG. 19 illustrates an example of a method for determining adapted correction bound for DepQuant quantizers when absolute value of bound offset o is higher than 1, according to an embodiment;

FIG. 20 shows two remote devices communicating over a communication network in accordance with an example of the present principles.

FIG. 21 shows the syntax of a signal in accordance with an example of the present principles.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

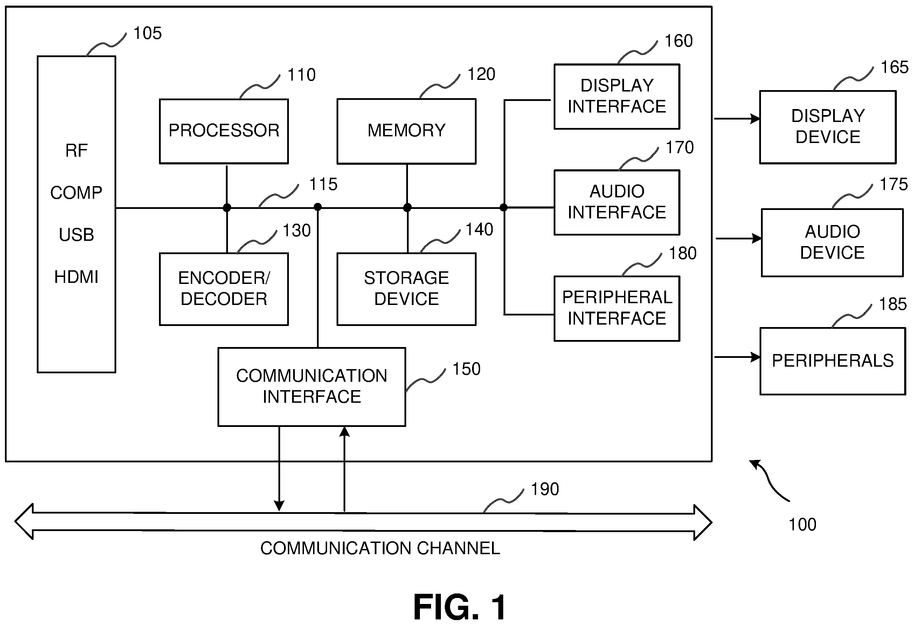

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

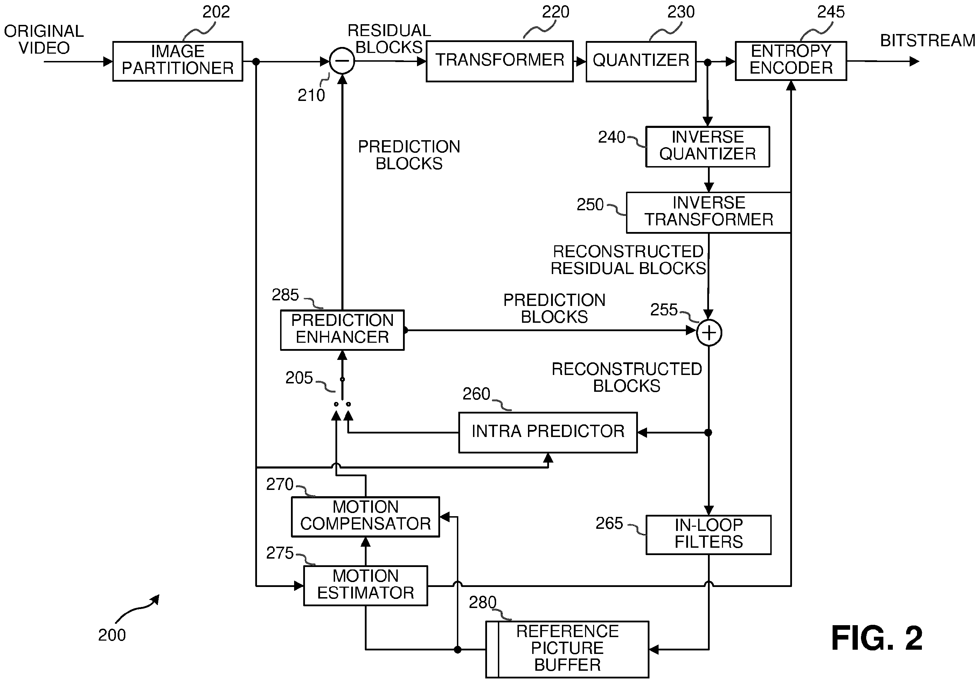

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

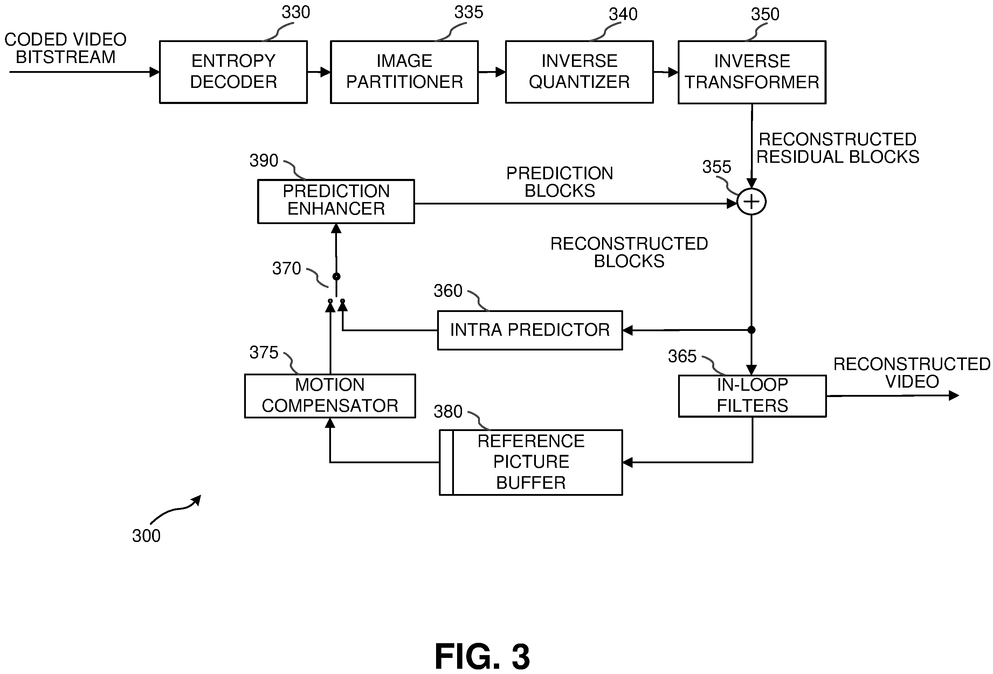

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, $Y$, and chroma components, $U$ and $V$ (also denoted herein by $C$).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340, and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Embodiments described herein relate to Quantization constrained correction filter.

In video compression systems, in-loop filters are used to enhance reconstructed images before storing them in the reference buffer. In-loop filters form a whole family. Among them, deblocking filters (DBF) aim at reducing blocking artifacts occurring along block boundaries. Deblocking filters are usually designed to improve subjective quality, that is, the noticeability by the human visual system of such coding errors. In usual video coding standards such as HEVC and VVC, deblocking filters are predetermined based on coding information (such as prediction modes, motion vectors, transform coefficients) and on local variations across block boundaries. On the other hand, adaptive loop filters (ALF) are learnt at encoder side in order to minimize the mean squared error with respect to source images, then the learned filter weights are written to the bitstream. Adaptive loop filters are applied at CTU-level, while deblocking filters are run along block borders.

In the *International application* WO2024200011, a quantization-constrained (QC) correction filter adds a complementary step to existing filters with the goal to prevent these filters from losing information carried by the quantized transform coefficients signaled in the bitstream, while still preserving the filtering effect.

Embodiments described herein provide for adapting the QC correction for blocks encoded with the Dependent Quantization tool (DepQuant) instead of uniform quantization.

Scalar quantization in High Efficiency Video Coding (HEVC)

HEVC and VVC standards specify conventional independent scalar quantization with Uniform Reconstruction Quantizers (URQs). The reconstructed transform coefficients $c_r$ of URQs are completely denoted by integer multiples of a quantization step size $\Delta$ (a.k.a. quantization step) which depends on a quantization parameter (QP). This integer specifies the associated transform coefficient level, which is transmitted in the bitstream as quantization levels $c_q$. On the decoder side, given a quantization level $c_q$ and a quantization step size $\Delta$, a reconstructed transform coefficient $c_r$ may be generated as follows :

$$c_r = Q^{-1}(c_q) = c_q \times \Delta \qquad (1)$$

On the encoder side, given a coefficient c (a.k.a a transform coefficient or more precisely a prediction residual transform coefficient) and a quantization step size $\Delta$, a quantization level $c_q$ may be generated as follows:

$$c_q = Q(c) = \lfloor abs(c)/\Delta + a \rfloor \times sgn(c), \qquad (2)$$

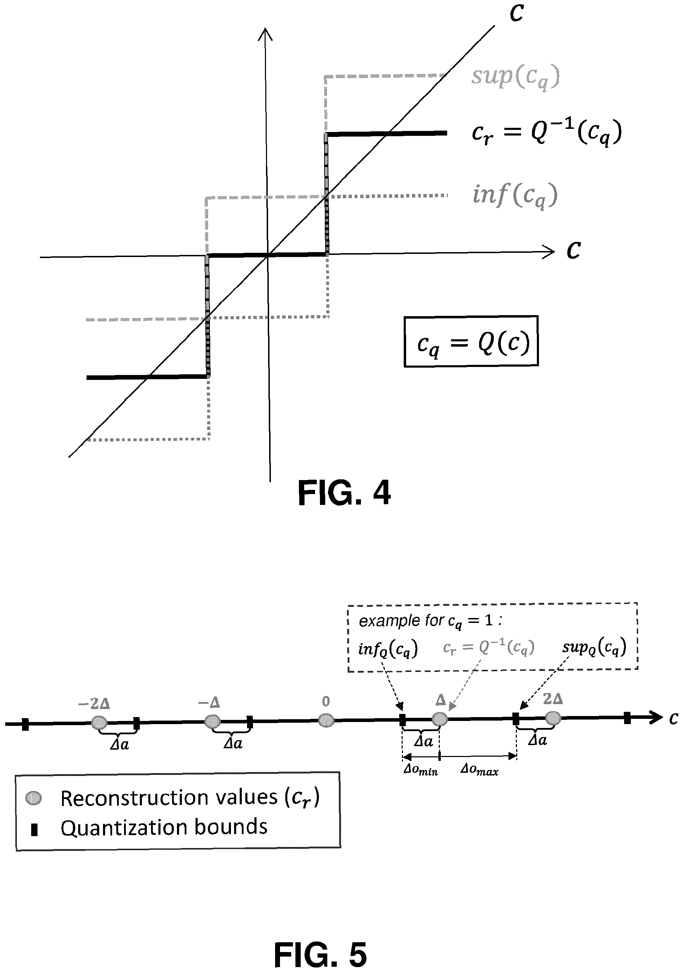

where $\lfloor . \rfloor$ is the floor operation (i.e. rounding to the lower integer), *abs* is the absolute value, *sgn* is the sign function (i.e. returns 1 if c>0, -1 if c<0 and 0 if c=0), and *a* is a parameter such that 0<a<1. With this quantization method, every quantization level $c_q$ is associated to quantization bounds $inf_Q(c_q)$ and $sup_Q(c_q)$ such that an original coefficient c between $inf_Q(c_q)$ and $sup_Q(c_q)$ is quantized to $c_q$. Hence assuming this quantization method was used by the encoder, and given a quantization level $c_q$, the original coefficient c associated with $c_q$ is known to be between $inf_Q(c_q)$ and $sup_Q(c_q)$, as illustrated in FIG. 4. In the case of uniform quantization with quantization step size $\Delta$ and parameter *a*, the inferior and superior quantization bounds are defined as follows:

$$inf_Q(c_q) = \begin{cases} (c_q - o_{max}) \times \Delta & if\ c_q \leq 0 \\ (c_q + o_{min}) \times \Delta & if\ c_q > 0 \end{cases}, \qquad (3a)$$

$$sup_Q\big(c_q\big) = \begin{cases} \big(c_q - o_{min}\big) \times \varDelta & if\ c_q < 0 \\ \big(c_q + o_{max}\big) \times \varDelta & if\ c_q \geq 0 \end{cases} , \qquad (3b)$$

with minimum bound offset $o_{min}$ and maximum bound offset $o_{max}$ defined as $o_{min}$ = -$a$ and $o_{max}$ = 1 - $a$. This parameterization of the quantization bounds, and reconstruction values is further illustrated in FIG. 5.

Both quantization bounds can thus be expressed as $(c_q + o) \times \varDelta$, with a bound offset $o$ selected among $-o_{max}$, $-o_{min}$, $o_{max}$ and $o_{min}$, depending on $c_q$ and on the type of quantization bound (inferior or superior). According to Equations 3a, the value of o for an inferior quantization bound is:

$$o = \begin{cases} -o_{max} & if\ c_q \leq 0 \\ +o_{min} & if\ c_q > 0 \end{cases} , \qquad (4a)$$

and according to Equations 3b, the value of o for a superior quantization bound is:

$$o = \begin{cases} -o_{min} & if\ c_q < 0 \\ +o_{max} & if\ c_q \geq 0 \end{cases} \qquad (4b)$$

The encoder may use alternative strategies to select the quantization levels $c_q$. For example, rate distortion optimized quantization (RDOQ) optimizes the quantization levels accounting not only for the distortion (i.e., MSE), but also for the rate. In this case, it is no longer guaranteed that the original coefficients $c$ are between the bounds $inf_Q(c_q)$ and $sup_Q(c_q)$.

In the quantization constrained correction, $c$ is assumed to be bounded by $inf_Q(c_q)$ and $sup_Q(c_q)$, where $inf_Q(c_q)$ and $sup_Q(c_q)$ can be determined on the decoder side knowing the quantization level $c_q$, the scalar quantizer $Q$ (a.k.a. scalar quantization operation) and its quantization parameter (QP). If the encoder uses quantization strategies that may break this assumption, such as RDOQ, the method remains applicable.

Quantization constrained correction filter

In the quantization-constrained correction filter, a quantization constraint is defined as the following equation:

$$Q(c_x) = c_q, \qquad (5)$$

where $Q$ is a scalar quantization operation (a.k.a. scalar quantizer), $c_q$ is the quantization level of a prediction residual transform coefficient c, and $c_x$ is a reconstructed value of the corresponding transform coefficient c. When no in-loop or out-of-loop filter is applied to a reconstructed picture, each coefficient $c_x$ is obtained as $c_x = c_r$. Since $c_r = Q^{-1}(c_q)$, its value is between the quantization bounds $inf(c_q)$ and $sup(c_q)$ (see FIG. 4). Therefore, in this case, the quantization constraint $Q(c_r)$ = $c_q$ is satisfied. Assuming that each quantization level was determined by the encoder as $c_q = Q(c)$, where c is the original (unquantized) coefficient, then $Q(c_r) = Q(c)$, which is a necessary condition to reconstruct the original coefficient c without error. More generally, the absolute error $|c_r - c|$ between a reconstructed coefficient and the corresponding original coefficient is such that $0 \leq |c_r - c| < sup_Q(c_q) - inf_Q(c_q)$.

However, in the case of filtering the reconstructed picture (e.g., with DBF, SAO, ALF, etc.), each coefficient $c_x$ is defined as $c_x = c_f$, where $c_f$ is the corresponding prediction residual transform coefficient of said reconstructed and filtered picture ($c_f$ may not be computed explicitly in video coding). In this case, $c_x$ might not satisfy the above quantization constraint anymore, resulting in a loss of information. For example, the DBF filter improves the subjective quality by removing block discontinuities, but it may also remove some details in the filtered area at the borders of the blocks. As a result, for some coefficients, we may have $c_f > sup_Q(c_q)$ or $c_f < inf_Q(c_q)$, and thus $Q(c_f) \neq c_q$. Said otherwise, the quantization constraint is not necessarily satisfied. This results in a sub-optimal MSE of the filtered picture since the corresponding original coefficient c is expected to be in the range $[sup_Q(c_q), inf_Q(c_q)]$. Thus, $c_f$ is necessarily different from the original coefficient c (i.e. $|c_f - c| > 0$), and the error $|c_f - c|$ is not bounded by $sup_Q(c_q) - inf_Q(c_q)$. Although the ALF filter is designed to reduce the MSE between the original and the reconstructed and filtered picture, it does not guarantee that the quantization constraint $Q(c_f) = c_q$ is satisfied for every coefficient $c_f$, hence potentially leading to sub-optimal MSE given that the quantization levels $c_q$ are known to both the encoder and the decoder.

The QC correction filter solves this problem by enforcing the quantization constraint on the prediction residual transform coefficients of the filtered picture.

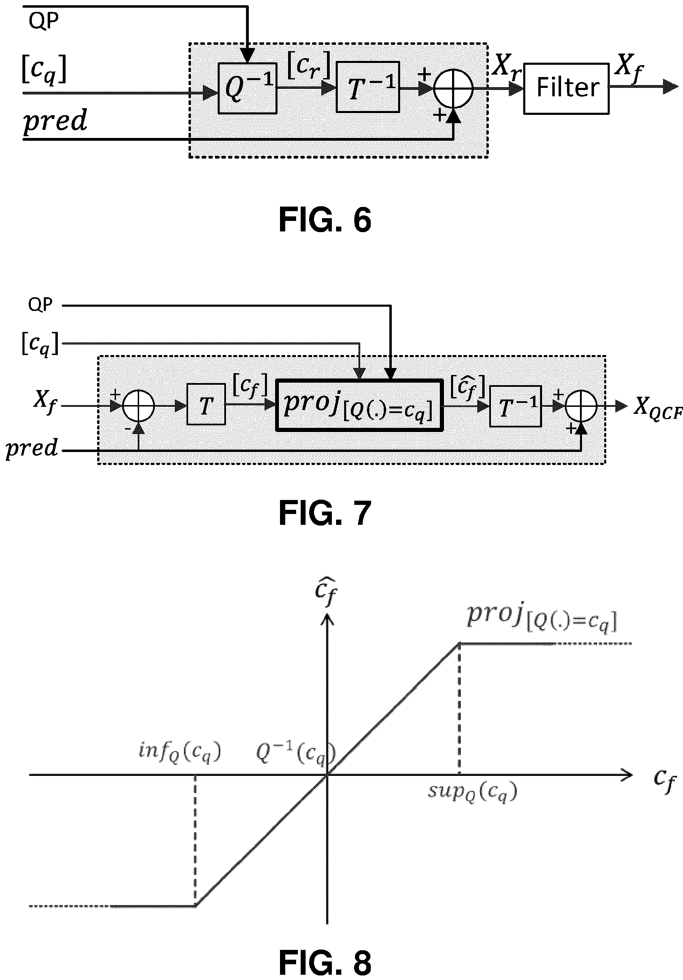

The QC correction is applied to an image block $X_f$ obtained by filtering a block $X_r$ previously obtained using conventional reconstruction steps in video coding, as shown in FIG. 6. These reconstruction steps in video coding are for example implemented in the video encoder of FIG. 2 or video decoder of FIG. 3 described above. These steps include:

- Scalar dequantization of quantization levels $c_q$ to produce reconstructed coefficients $c_r = Q^{-1}(c_q)$, where the dequantization function $Q^{-1}$ is parameterized by a quantization parameter QP and where each quantization level $c_q$ is assigned to a position within the block.
- Inverse transform $T^{-1}$ applied to the coefficients $c_r$, in order to obtain a prediction residual block.
- Reconstruction of the block $X_r$ as the sum between the prediction residual block and a prediction block *pred.*

After filtering $X_r$ to produce $X_f$, the QC correction described in FIG. 7 first converts $X_f$ back to prediction residuals and compute its transform coefficients $c_f$ in order to correct the values of these coefficients using a correction step that ensures that the quantization constraint $Q(\widehat{c_f}) = c_q$ is satisfied for the corrected transform coefficient $\widehat{c_f}$. The corrected transform coefficients are then converted back to obtain the corrected image block $X_{QCF}$ using the inverse transform $T^{-1}$ and the summation with the prediction *pred.* The steps of the QC correction are further detailed hereafter: Prediction subtraction: $X_f$ is converted back to prediction residuals. To this aim, the prediction block *pred* is subtracted from the filtered image block $X_f$ in order to obtain a filtered prediction residual block. The prediction *pred* is equal to the prediction used in the reconstruction stage. Therefore, the prediction block *pred* does not have to be computed again using the codec's prediction mechanisms. Instead, the prediction block *pred* may be stored in a buffer during the reconstruction and reused for the QC correction.

Forward Transform: The filtered prediction residual block is then converted back to the transform domain using the forward transform $T$. In the case where several types of transforms or inverse transforms may be applied (e.g., DCT-II, DST-7, DCT-8), the QC correction uses the forward transform $T$ of the same type as the inverse transform $T^{-1}$ used during the reconstruction stage. For example, if a block X is reconstructed using the inverse of the DCT-II by a module 250 of video encoder 200 of FIG. 2 or a module 350 of video decoder 300 of FIG. 3, its corresponding block (i.e. the block of coefficients $c_f$ obtained from X) in the QC correction is transformed with forward DCT-II. The forward transform thus produces a new block of prediction residual transform coefficients $c_f$, named more simply transform coefficients $c_f$, each located at a given position within the block. Each transform coefficient $c_f$ can thus be associated with the quantization level $c_q$ used during the reconstruction stage, and which is located at the same position within the block.

Projection to the quantization constraint: Each transform coefficient $c_f$ of the block of prediction residual transform coefficients is corrected to obtain a block of corrected prediction residual transform coefficients $\widehat{c_f}$, named more simply corrected transform coefficient $\widehat{c_f}$. The corrected version is computed as $\widehat{c_f} = proj_{[Q(.)=c_q]}(c_f)$, where $proj_{[Q(.)=c_q]}$ is a correction function (also called projection function onto the quantization constraint). This correction function ensures that the constraint $Q(\widehat{c_f}) = c_q$ is satisfied, where $c_q$ is the quantization level associated with $c_f$, and where $Q$ is the scalar quantizer associated to the scalar dequantizer $Q^{-1}$ used in the reconstruction stage. The correction function can be defined as follows:

$$proj_{[Q(.)=c_q]}(c_f) = \min(\max(c_f, inf_Q(c_q)), sup_Q(c_q)) \qquad (6)$$

It is illustrated in FIG. 8. With this definition, each corrected transform coefficient $\widehat{c_f}$ is always between the quantization bounds $inf_Q(c_q)$ and $sup_Q(c_q)$ of the quantization level $c_q$ for the quantizer $Q$. Hence $\widehat{c_f}$ satisfies $Q(\widehat{c_f}) = c_q$. However, if $c_f$ is already within the quantization bounds, no correction is applied (i.e. $\widehat{c_f} = c_f$), which preserves the filtering effect.

The correction function in Equation (6) is defined to enforce the quantization constraint while also minimizing the squared error $(\widehat{c_f} - c_f)^2$ between the corrected and the uncorrected transform coefficient. However, other functions may be used. For example, a more general clipping function can be defined as $\widehat{c_f} = \min(\max(c_f, b_{inf}) b_{sup})$ where the correction bounds $b_{inf}, b_{sup}$ may be computed similarly to $inf_Q(c_q)$ and $sup_Q(c_q)$ using Equations (3a) and (3b) respectively, but where the values of the parameters $o_{min}$ and $o_{max}$ are set independently of the parameter $a$. For example, $o_{min}$ and $o_{max}$ may be pre-determined parameters known to both the encoder and decoder. Note that using $o_{min}$ and $o_{max}$ such that $-a \le$

$o_{min} < o_{max} \leq 1 - a$ ensures that $inf_Q(c_q) \leq b_{inf} < b_{sup} \leq sup_Q(c_q)$. Hence, assuming that $c_q$ was computed with the quantization function in Equation (2) by the encoder, using such values of $o_{min}$ and $o_{max}$ still ensures that the quantization constraint $Q(\widehat{c_f}) = c_q$ is satisfied (since $inf_Q(c_q) < b_{inf} \leq \widehat{c_f} \leq b_{sup} < sup_Q(c_q)$ ). However, if other quantization methods are used by the encoder (e.g., RDOQ), the original coefficient may not be between the bounds $inf_Q(c_q)$ and $sup_Q(c_q)$ defined in Equations (3a) and (3b). Hence, in such cases, it may be advantageous to compute the correction bounds $b_{inf}$ and $b_{sup}$ using other values of $o_{min}$ and $o_{max}$ that do not necessarily satisfy the constraint $-a \leq o_{min} < o_{max} \leq 1 -a$.

In another example, a smooth version of the correction function $proj_{[Q(.)=c_q]}$ may be used such as:

$$\widehat{c_f} = s \cdot \tanh\left(\frac{c_f - t}{s}\right) + t, \quad (7)$$

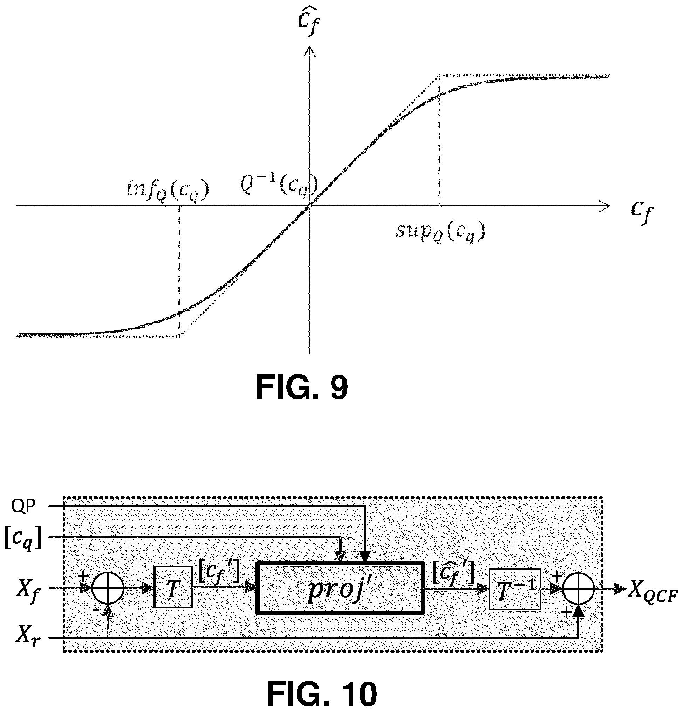

with a scale $s = \frac{sup_Q(c_q) - inf_Q(c_q)}{2}$ and a translation $t = \frac{sup_Q(c_q) + inf_Q(c_q)}{2}$. This smooth function is illustrated by FIG. 9. Similarly to the previous example, the inferior and superior correction bounds $b_{inf}$ and $b_{sup}$ may be used instead of the inferior and superior quantization bounds $inf_Q(c_q)$ and $sup_Q(c_q)$ respectively for the computation of the scale and translation parameters $s$ and $t$.

In a variant of the QC correction, the minimum and maximum bound offsets $o_{min}$ and $o_{max}$ may be enabled or disabled individually. In this variant, there may be either zero, one or two available correction bounds. For example, if $c_q > 0$, $o_{min}$ is enabled and $o_{max}$ is disabled, then the inferior correction bound $b_{inf}$ can be computed according to Equation (3a) but the superior correction bound $b_{sup}$ cannot be computed according to Equation (3b). In such cases where only the inferior correction bound is available, the correction function may be performed as $\widehat{c_f} = \max(c_f, b_{inf})$. In other cases where only the superior correction bound is available, the correction function may be performed as $\widehat{c_f} = \min(c_f, b_{sup})$. Note also that if $o_{max}$ is disabled and $c_q = 0$, then none of the correction bounds are available (even if $o_{min}$ is enabled). In this case, the QC correction is skipped for the transform coefficient, i.e. $\widehat{c_f} = c_f$.

Inverse Transform and addition with prediction:_After enforcing the quantization-constraint in the residual transform domain, the corrected transform coefficients $\widehat{c_f}$ are converted back to the image domain to obtain a final corrected image block $X_{QCF}$. This is performed by first applying the inverse transform again to obtain a block of corrected prediction residuals. The same inverse transform $T^{-1}$ is used as in the reconstruction stage. Finally, the prediction block $pred$ is added back to the block of corrected prediction residuals to obtain a corrected image block $X_{QCF}$ which satisfies the quantization constraint.

In a variant, QC can be implemented in an alternative manner using the non-filtered reconstructed image block. In this variant, the QC correction is computed using the non-filtered reconstructed image block $X_r$ instead of the prediction block $pred$ as illustrated in FIG. 10. In this case, a filtering difference block $X_f - X_r$ is computed (instead of the prediction residual of the filtered block $X_f - pred$), and the transform is applied to this block to obtain filtering difference transform coefficients $c_f'$. Assuming that the transform is a linear operation, each filtering difference transform coefficient $c_f'$ is related to the transform coefficient $c_f$ as follows:

$$c_f = c_f' + Q^{-1}(c_q) \qquad (8)$$

As a result, the QC correction may be performed by directly correcting each filtering difference transform coefficient $c_f'$ using a modified projection function $proj'$ to obtain the corrected version $\widehat{c_f}'$ as follows:

$$\widehat{c_f}' = proj'(c_f') = proj_{[Q(.)=c_q]}\left(c_f' + Q^{-1}(c_q)\right) - Q^{-1}(c_q) \qquad (9)$$

The corrected image block $X_{QCF}$ may be computed using the inverse transform of the block of corrected filtering difference coefficients $\widehat{c_f}'$, and by summing the result with the non-filtered reconstructed image block $X_r$.

In some cases, the expression of the modified projection function $proj'$ may be simplified so that the dequantized quantization level $Q^{-1}(c_q)$ is not explicitly required to compute $\widehat{c_f}'$. For example, considering the quantization bounds defined in Equations (3a) and (3b), and the correction function defined in Equation (6), the modified correction function in Equation (9) then simplifies into:

$$proj'\left(c_f{}'\right) = \min\left(\max\left(c_f', \Delta_Q^{inf}(c_q)\right), \Delta_Q^{sup}(c_q)\right) \qquad (10)$$

where $\Delta_Q^{inf}(c_q) = inf_Q(c_q) - Q^{-1}(c_q)$ and $\Delta_Q^{sup}(c_q) = sup_Q(c_q) - Q^{-1}(c_q)$ are respectively the inferior and superior bound of the filtering difference transform coefficient associated with a quantization level $c_q$. These bounds are computed as:

$$\Delta_Q^{inf}(c_q) = \begin{cases} -\Delta o_{max} \ if \ c_q \leq 0 \\ +\Delta o_{min} \ if \ c_q > 0 \end{cases} \qquad (11a)$$

$$\Delta_Q^{sup}(c_q) = \begin{cases} -\Delta o_{min} \ if \ c_q < 0 \\ +\Delta o_{max} \ if \ c_q \geq 0 \end{cases} \qquad (11b)$$

Similar simplifications of the modified correction function *proj'* may be obtained for different equations of the correction function using the new bounds $\Delta_Q^{inf}(c_q)$ and $\Delta_Q^{sup}(c_q)$ which can be computed without using the dequantized quantization level $Q^{-1}(c_q)$. For example, considering the transform coefficient correction defined in Equation (7), the corresponding modified correction function *proj'* becomes:

$$\widehat{c_f}{}' = proj'(c_f{}') = s \cdot \tanh\left(\frac{c_f'-t}{s}\right) + t' \qquad (13)$$

With the same scale *s* as in Equation (7), $s = \frac{sup_Q(c_q)-inf_Q(c_q)}{2} = \frac{\Delta_Q^{sup}(c_q)-\Delta_Q^{inf}(c_q)}{2}$, and using a modified translation $t' = \frac{\Delta_Q^{sup}(c_q)-\Delta_Q^{inf}(c_q)}{2}$.

Analogously to the original correction function in FIG. 7, the modified correction function *proj'* in FIG. 10 may be performed as $proj'\left(c_f'\right) = \min(\max\left(c_f', b_{inf}'\right) b_{sup}')$ where the correction bounds $b_{inf}'$ and $b_{sup}'$ are computed similarly to $\Delta_Q^{inf}(c_q)$ and $\Delta_Q^{sup}(c_q)$ using Equations (11a) and (11b) respectively, but where the parameters $o_{min}$ and $o_{max}$ may have pre-determined values known to the encoder and the decoder (e.g. determined and signaled in a bitstream by the encoder), instead of using $o_{min}$ = -*a* and $o_{max}$ = 1 - *a*.

Integer bound offset parameterization for integer bound computation

For practical computation of the bounds using the bound offsets $o_{min}$ and $o_{max}$, an integer approximation of Equations (3a) and (3b) may be applied, based on an integer parameterization of the bound offsets of the form $o_{min} = \frac{O_0}{2^{S_0}}$ and $o_{max} = \frac{O_1}{2^{S_1}}$, where $O_0$ and $S_0$ are respectively the integer bound offset parameter and the integer shift parameter of the minimum bound offset, and $O_1$ and $S_1$ are respectively the integer bound offset parameter and the integer shift parameter of the maximum bound offset. Each integer bound offset parameter $O_i$ (with *i* = 0 or *i* = 1) is represented by $N_i$ bits and a starting value $start_i$, i.e., $O_i$ can take $2^{N_i}$ integer values in the range [$start_i$, $start_i$ + $2^{N_i}$ - 1]. For example, the values of $S_i$ and $start_i$ may be fixed as $S_i = N_i$ - 1 and $start_i = -2^{S_i}$ so that the corresponding bound offset has $2^{N_i}$ possible values uniformly spaced in the range [-1,1[. Alternatively, $S_i$ and $start_i$ may be fixed as $S_i = N_i$ - 1 and $start_i = 1 - 2^{S_i}$ so that the corresponding bound offset has $2^{N_i}$ possible values uniformly spaced in the range ]-1,1].

In existing video coding standards such as HEVC and VVC, the quantization step $\Delta$ is also represented with integer parameters $scale_\Delta$ and $shift_\Delta$ as $\Delta = scale_\Delta/2^{shift_\Delta}$ in order to perform dequantization with integer-based computations.

Based on these integer parameterizations, a correction bound $b(c_q)$ associated to a quantization level $c_q$ may be computed using only operations on integers: additions, multiplications and bitshifts (i.e. leftshift $\ll$, or rightshift $\gg$). For example, using an integer bound offset parameter $O$, its corresponding shift $S$, and the quantization step parameters

$scale_\Delta$ and $shift_\Delta$, a correction bound $b(c_q)$ may be computed as:

$$b(c_q) = \begin{cases} (num + add) \gg shift & if \ shift > 0 \\ num \ll -shift & if \ shift \le 0 \end{cases} \qquad (14)$$

where $num = ((c_q \ll S) + O) * scale_\Delta$, $shift = shift_\Delta + S$, and $add$ is a value determined depending on the rounding strategy. For example, using $add = 1 \ll (shift - 1)$, Equation (14) approximates the result of the division $\frac{num}{2^{shift}}$ with the closest integer when $shift > 0$.

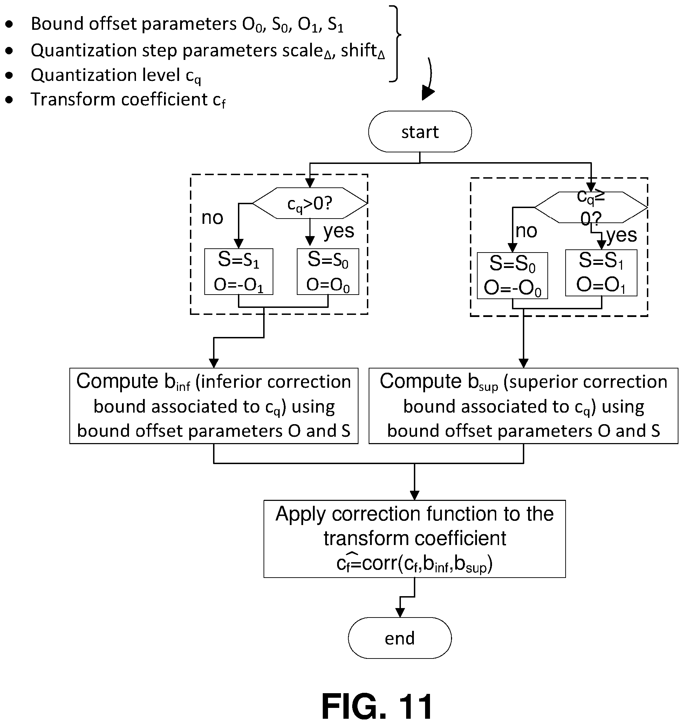

For each transform coefficient $c_f$ associated to a quantization level $c_q$, its inferior and superior correction bounds $b_{inf}$ and $b_{sup}$ may thus be computed with this method using values of $O$ and $S$ selected depending on the sign of $c_q$ as illustrated in FIG. 11. For example, considering the integer parameterization of $o_{min}$ (with $O_0$ and $S_0$) and $o_{max}$ (with $O_1$ and $S_1$), the inferior bound in Equation (3a) may be approximated by an inferior correction bound $b_{inf}$ computed with Equation (14) where $S$ and $O$ are obtained as $S = S_1$ and $O = -O_1$ if $c_q \le 0$, or $S = S_0$ and $O = O_0$ if $c_q > 0$. Similarly, the superior bound in Equation (3b) may be approximated by a superior correction bound $b_{sup}$ computed with Equation (14) where $S$ and $O$ are obtained as $S = S_0$ and $O = -O_0$ if $c_q < 0$ or $S = S_1$ and $O = O_1$ if $c_q \ge 0$.

Using both correction bounds $b_{inf}$ and $b_{sup}$, a correction function is finally applied to the transform coefficient $c_f$ to obtain the corrected transform coefficient $\widehat{c_f}$.

Note that for computing correction bounds $b_{inf}'$ and $b_{sup}'$ of a filtering difference coefficient $c_f'$, Equation (14) may be used similarly with the same selection of the bound offset parameters $O$ and $S$ (based on $c_q$, $O_0$, $O_1$, $S_0$ and $S_1$), but where the numerator is computed as $num = O * scale_\Delta$ (instead of $num = ((c_q \ll S) + O) * scale_\Delta$).

Correction of a symmetrized coefficient

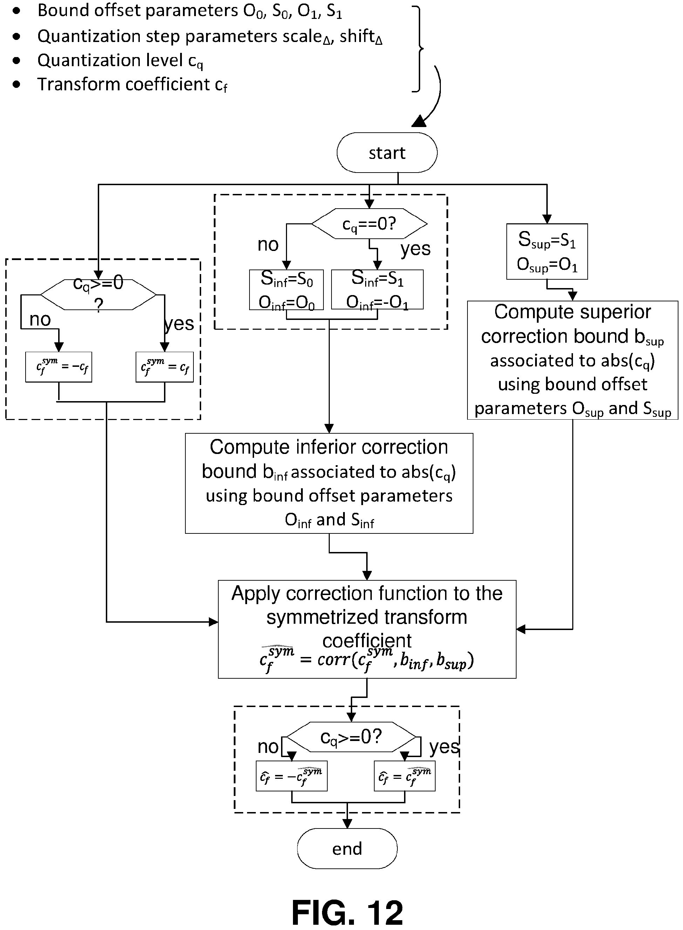

In a variant of the QC correction detailed in FIG. 12, the correction of a coefficient $c_f$ associated with a quantization level $c_q$ is performed indirectly by exploiting the symmetry property of the quantization bounds and by applying the correction to a symmetrized coefficient $c_f^{sym}$ associated with the absolute value $abs(c_q)$ of the quantization level. The symmetrized coefficient $c_f^{sym}$ is equal to $c_f$ if $c_q \ge 0$, or equal to $-c_f$ otherwise. The correction bounds of the symmetrized coefficient are then computed, and the correction function is applied to $c_f^{sym}$ to obtain a corrected symmetrized coefficient $\widehat{c_f^{sym}}$. Finally, the corrected coefficient $\widehat{c_f}$ is equal to $\widehat{c_f^{sym}}$ if $c_q \ge 0$ or equal to $-\widehat{c_f^{sym}}$ otherwise. In this variant, the inferior bound $b_{inf}$ of $c_f^{sym}$ may be computed with Equation (14) using $S = S_1$ and $O = -O_1$ if $c_q = 0$ or $S = S_0$ and $O = O_0$ otherwise, and by replacing the quantization level $c_q$ by its absolute value $abs(c_q)$ in the numerator (i.e., $num = ((abs(c_q) \ll S) + O) * scale_\Delta$). The superior bound may be computed similarly using $S = S_1$ and $O = O_1$.

Dependent Quantization

In VVC, the Dependent Quantization (DepQuant) tool may be used for quantizing the transform coefficients of a block (H. Schwarz, T. Nguyen, D. Marpe, T. Wiegand, "CE7: Transform coefficient coding and dependent quantization (Tests 7.1.2, 7.2.1)", JVET-K0071, July 2018). DepQuant is based on two uniform quantizers and for a given transform coefficient, the choice of the quantizer is determined by a state where the transition between the states is realized by a state machine.

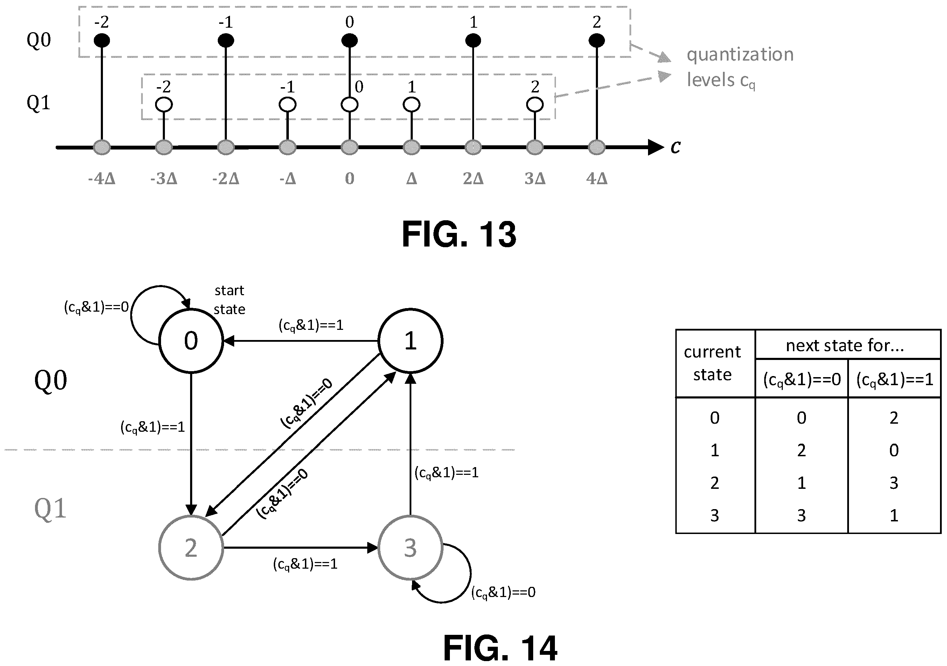

The two scalar quantizers used, denoted by Q0 and Q1, are illustrated in FIG. 13. The location of the available reconstruction levels is uniquely specified by a quantization step size $\Delta$. If we neglect the fact that the actual reconstruction of transform coefficients uses integer arithmetic, the two scalar quantizers Q0 and Q1 are characterized as follows: The reconstruction levels of the first quantizer Q0 are given by the even integer multiples of the quantization step size $\Delta$. When this quantizer is used, a reconstructed transform coefficient $c_r$ is calculated according to $c_r = 2 \times c_q \times \Delta$, where $c_q$ denotes the quantization level associated to the transform coefficient.

The reconstruction levels of the second quantizer Q1 are given by the odd integer multiples of the quantization step size $\Delta$ and, in addition, the reconstruction level equal to zero. The mapping of transform coefficient levels k to reconstructed transform coefficients $c_r$ is specified by $c_r = (2c_q - \text{sgn}(c_q)) \times \Delta$, where $\text{sgn}(\cdot)$ denotes the sign function (i.e., $\text{sgn}(x) = -1$ if $x<0$, or 1 if $x>0$ or 0 if $x=0$).

For both quantizers, the reconstructed transform coefficients $c_r$ is thus obtained as $c_r = qIdx \times \Delta$ where $qIdx$ is a quantization index obtained as $qIdx = 2c_q$ if Q0 is used or as $qIdx = 2c_q - sgn(c_q)$ if Q1 is used. Hence, the reconstruction values in DepQuant are computed the same way as in a Uniform Reconstruction Quantizer, but the computation uses the intermediate quantization index qIdx, instead of directly using the quantization level $c_q$ obtained from the bitstream.

The scalar quantizer used (Q0 or Q1) is not explicitly signalled in the bitstream. Instead, the switching between the two scalar quantizers (Q0 and Q1) is realized via a state machine with four states as illustrated in FIG. 14. The state can take four different values: 0, 1, 2, 3. It is uniquely determined by the parities of the quantization levels of the transform coefficients preceding the current transform coefficient in coding/reconstruction order.

At the start of the inverse quantization for a transform block, the state is set equal to 0. The transform coefficients are reconstructed in scanning order (i.e., in the same order they are entropy decoded). After a current transform coefficient is reconstructed, the state is updated as shown in FIG. 14, where $c_q$ denotes the value of the quantization level. Note that the next state only depends on the current state and the parity ($c_q$ & 1) of the current quantization level $c_q$.

The state update can be written as state = stateTransTable[ state ][ $c_q$ & 1 ], where stateTransTable represents the table shown in FIG. 14 and the operator & specifies the bitwise "and" operator in two's-complement arithmetic. Alternatively, the state transition can also be specified without a table look-up:

state = ( 32040 >> ( ( state << 2 ) + ( ( $c_q$ & 1 ) << 1 ) ) ) & 3

At this, the 16-bit value 32040 specifies the state transition table.

The state uniquely specifies the scalar quantizer used. If the state for a current transform coefficient is equal to 0 or 1, the scalar quantizer Q0 is used. Otherwise (the state is equal to 2 or 3), the scalar quantizer Q1 is used.

Extensions of Dependent Quantization in ECM

The DepQuant tools may also be applied with other state transition tables, number of states, or choice of quantizer for each state. For example, DepQuant is also implemented in the ECM software with either 4 or 8 states as described in H. Schwarz, S. Schmidt, P. Haase, T. Nguyen, D. Marpe, T. Wiegand, "Additional support of dependent quantization with 8 states", JVET-Q0243, Jan 2020. In the DepQuant implementation of ECM with either 4 or 8 states, the quantizer is chosen based on the parity of the state: if the state for a current transform coefficient is even (i.e., (state&1) ==0), the scalar quantizer Q0 is used. Otherwise (i.e., (state&1)==1), the scalar quantizer Q1 is used. The state transition table is also adapted.

For 4-states, the transition table is:

$$stateTransTable [ ][ ] = \{ \{ 0, 1 \}, \{ 2, 3 \}, \{ 1, 0 \}, \{ 3, 2 \} \}$$

for 4 states, or as

For 8 states, the transition table is:

$$stateTransTable [ ][ ] = \{\{ 0, 2 \}, \{ 5, 7 \}, \{ 1, 3 \}, \{ 6, 4 \}, \{ 2, 0 \}, \{ 4, 6 \}, \{ 3, 1 \}, \{ 7, 5 \}\}$$

Alternatively, the state transition can also be specified without a look-up table:

$$state = ( stateTransTab >> ((state<<3)+((c_q\&1)<<2)) ) \& 15$$

where stateTransTab is a value representing the state transition table that depends on whether 4 or 8 states are used (stateTransTab=587280912 for 4 states or stateTransTab =6274468666787591456 for 8-states).

In the quantization constrained correction method described above, the computation of the correction bounds is performed assuming that the transform coefficients are reconstructed from the quantization levels using a Uniform Reconstruction Quantizer.

However, when a DepQuant tool is used for a block, the quantization levels may result in different reconstruction values of the transform coefficient. Hence, the correction bounds computed in the QC correction as described above may not be suitable for correcting these transform coefficients. The DepQuant tools thus requires adjustments of the correction bounds computation in the QC correction method.

Embodiments are described herein that provide an adapted QC correction method which computes suitable correction bounds for the transform coefficients of blocks encoded using the DepQuant tool.

In an embodiment, the correction bounds associated to a quantization level $c_q$ are determined using the intermediate quantization index qIdx of DepQuant, instead of directly using the quantization level $c_q$.

Another embodiment is provided for resizing a bound offset $o$ in order to preserve the relationship between the bound offset $o$ and the position of the corresponding correction bound relatively to the reconstruction values of the selected quantizer.

Another embodiment is provided for further adjusting the quantization level $c_q$ and the bound offset $o$ for the case where the absolute value of the bound offset is higher than 1.

A further embodiment is provided for adaptations of the correction bound computation for the case of correcting a filtering difference transform coefficient (i.e., for QC correction using a non-filtered reconstructed block $X_r$ instead of a prediction block pred).

The embodiments described herein can be implemented in a video encoder and a video decoder to encode image block of a video, for example the encoder 200 of FIG.2 and the decoder 300 of FIG. 3.

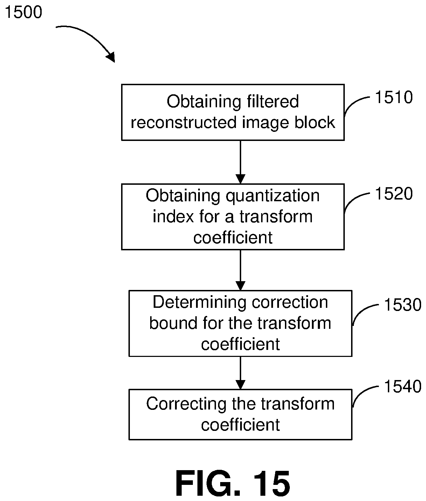

FIG. 15 illustrates, in an embodiment, an example of a method 1500 for quantization-constrained correction of a block quantized with dependent quantization DepQuant. At 1510, a reconstructed image block is determined from a prediction block and a reconstructed prediction residual, and a filtered version of the reconstructed image block is obtained. This corresponds to the reconstruction of the image block after decoding at the decoder or encoding decoding at the encoder. For example, the filtered version of the reconstructed image block is the reconstructed block $X_f$ from FIG. 6.

At 1520, a transform block is determined for a residual obtained between the filtered reconstructed image block and the prediction block as in FIG. 7 or obtained between the filtered reconstructed image block and the non-filtered reconstructed image block as in FIG. 10. For example, as explained above, the transform block is obtained by applying the same transform on the residual as the one used for encoding the image block. A quantization index of the dependent quantization used for quantizing and dequantizing the image block is obtained for at least one transform coefficient of the transform block. As described further below, in a variant, the quantization index can be determined by applying the same state transition process as when dequantizing the decoded transformed coefficients of the image block. The quantization index is thus obtained based on a decoded quantization level obtained for a position of the at least one transform coefficient in the transform block and a current state of the dependent quantization when dequantizing the decoded quantization level. In another variant, the quantization index can be retrieved from memory if the quantization indexes have been stored during dequantizing.

At 1530, at least one correction bound is determined based on the quantization index, a bound offset and a quantization step size of the dependent quantization. The correction bound can be determined for an inferior correction bound or a superior correction bound. In a variant, a first correction bound can be determined for the inferior correction bound and a second correction bound can be determined for a superior correction bound. In a variant, the inferior correction bound and superior correction bound can correspond to the inferior quantization bound $inf_Q(c_q)$ and superior quantization bound $sup_Q(c_q)$ mentioned above. In another variant, as the true quantization bounds might not be known, the correction process then uses inferior and superior correction bounds instead of the inferior and superior quantization bounds. These inferior and superior correction bounds can be derived from the quantization bounds equations described above, but computed from arbitrary bound offset value. In this variant, the inferior correction bound and superior correction bound can correspond to the inferior correction bound $b_{inf}$ and superior correction bound $b_{sup}$ mentioned above.

In a variant, the bound offset is determined from one of a minimum bound offset or a maximum bound offset depending on a decoded quantization level obtained for a position of the at least one transform coefficient in the transform block and depending on whether the bound offset is determined for an inferior correction bound or a superior correction bound. For example, the bound offset can be determined using Equations (4a) and (4b) described above.

In some variant, the minimum bound offset and/or maximum bound offset can be determined based on the parameter a of the quantizer. In other variants, the minimum bound offset and/or maximum bound offset can be transmitted in a bitstream and signaled to the decoder.

At 1540, the at least one transform coefficient is corrected as a function of the at least one correction bound providing at least one corrected transform coefficient. For example, when the bound offset is determined for an inferior correction bound, the transform coefficient is corrected by setting the transform coefficient to a new value when the transform coefficient is below the inferior correction bound. The new value can be the inferior correction bound or another value above the inferior correction bound. In another example, when the bound offset is determined for a superior correction bound, the transform coefficient is corrected by setting the transform coefficient to another new value when the transform coefficient is above the superior correction bound. The other new value can be the superior correction bound or a value below the superior correction bound. For example, the functions from FIG. 8 or 9 can be used to provide the new values.

When the transform coefficient satisfies the QC constraint (its value is between the inferior correction bound and the superior correction bound), its value is not changed/corrected.

When all transform coefficients of the transform block have been processed and eventually corrected, a corrected version of the transform block is provided that comprises the corrected transform coefficients and used to obtain a corrected version of the reconstructed image block.

Further details of the embodiment of FIG. 15 are provided below along with variants.

QC correction based on a state-dependent quantization index

In the QC correction, if we neglect the fact that actual computations are performed with integer arithmetic, a correction bound $b$ (i.e., either inferior correction bound $b_{inf}$ or superior correction bound $b_{sup}$) is obtained by summing the current reconstruction value $Q^{-1}(c_q)$ with the product of a bound offset $o$ and the quantization step $\Delta$ as follows:

$$b = Q^{-1}(c_q) + o \times \Delta \qquad (15)$$

where $o$ is defined according to Equation (4a) for an inferior correction bound or Equation (4b) for a superior correction bound. When a URQ is used, we have $Q^{-1}(c_q) = c_q \times \Delta$ (see Equation (1)), which leads to the correction bound $b = (c_q + o) \times \Delta$. However, in the dequantization of DepQuant, an intermediate quantization index qIdx is used instead of $c_q$, i.e., $Q^{-1}(c_q) = qIdx \times \Delta$. The quantization index qIdx depends on the quantization level $c_q$ and the selected quantizer Q0 or Q1, where the selection depends on the current DepQuant state. For example, in VVC, $qIdx = 2c_q$ if state>1 (i.e., Q0 selected), or $qIdx = (2c_q - \text{sgn}(c_q))$ otherwise (i.e., Q1 selected). In ECM, $qIdx = 2c_q$ if state&1==0 (i.e., Q0 selected), or $qIdx = (2c_q - \text{sgn}(c_q))$ otherwise (i.e., Q1 selected). As a result, the correction bound equation becomes $b = (qIdx + o) \times \Delta$.

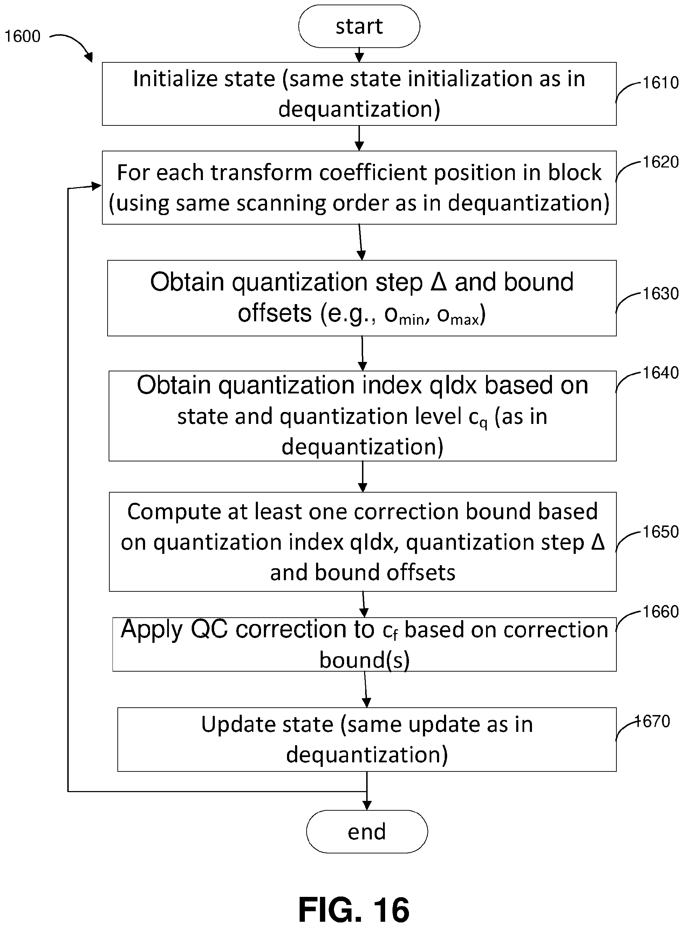

Hence, in an embodiment depicted in FIG. 16, the QC correction is adapted for a block coded with DepQuant by using the quantization index qIdx instead of directly using the quantization level $c_q$ for the computation of correction bounds. For that purpose, at 1610, a state is first initialized with the same initialization value as in the dequantization (e.g., state=0). Then, the transform coefficient positions in the block are scanned (1620) in the same scanning order as in the dequantization.

For each transform coefficient in the scanning order, the quantization step $\Delta$ is obtained (1630) as well as the bound offsets (e.g., minimum bound offset $o_{min}$, and maximum bound offset $o_{max}$).

The quantization index qIdx is then obtained (1640) based on the state and the quantization level $c_q$. The value of qIdx should be obtained the same way as in the dequantization process (e.g., for ECM: $qIdx = 2c_q$ if state&1==0, or $qIdx = 2c_q - \text{sgn}(c_q)$ otherwise).

Then, at least one correction bound is computed (1650) based on the quantization index qIdx, the quantization step $\Delta$, and the bound offsets. For example, an inferior correction bound $b_{inf}$ may be computed (e.g., with Equations 3a using qIdx instead of $c_q$), or a superior correction bound $b_{sup}$ may be computed (e.g., with Equations 3b using qIdx instead of $c_q$). Note that the correction bound may also be computed only with integer-based operations as in FIG. 11 by obtaining the integer parameters of the quantization step $\Delta$ (e.g., $scale_\Delta$, $shift_\Delta$) and the bound offsets $o_{min}$ and $o_{max}$ (e.g., $O_0$, $S_0$, $O_1$, $S_1$). In this case, the computation of $b_{inf}$ or $b_{sup}$ using bound offset parameters O and S in FIG. 11 is performed as in Equation (14), where $c_q$ is replaced with qIdx.

The QC correction is then applied (1660) to the transform coefficient $c_f$ based on the correction bound(s) by applying a correction function to $c_f$ to obtain the corrected transform coefficient $\widehat{c}_f$ (e.g., $\widehat{c}_f = \min(\max(c_f, b_{inf})\, b_{sup})$ ). Alternatively, the correction may be applied to the symmetrized coefficient $c_f^{sym}$ as in FIG. 12. In this case, the computation of the at least one correction bound is performed based on a symmetrized quantization index qIdx_sym associated with the absolute value $abs(c_q)$ of the quantization level. The symmetrized quantization index qIdx_sym may be directly obtained from $abs(c_q)$ (e.g., $qIdx\_sym = 2abs(c_q)$ if Q0 is selected or $qIdx\_sym = (2abs(c_q) - 1)$ otherwise), or may be obtained from the quantization index qIdx as $qIdx\_sym = abs(qIdx)$.

Finally, the state is updated (1670) using the same state update process as in the dequantization (e.g., state transition based on the current state and the parity of $c_q$ as illustrated in FIG. 14).

In a variant, the computation of at least one correction bound may be skipped. For example, if the maximum bound offset $o_{max}$ is disabled (i.e., only the minimum bound offsets $o_{min}$ is enabled) and the quantization level $c_q$ is equal to 0, then none of the inferior or superior correction bounds can be computed. In this case, the QC correction of $c_f$ is also skipped, but the state update is still performed in order to obtain the correct state for the next transform coefficients in the block.

In another variant, the state update may be skipped for some transform coefficients. For example, for the last transform coefficient position in the scanning order, the state update is not necessary since there is no further transform coefficient to be processed. Furthermore, considering the state transition process in FIG. 14, if the quantization level $c_q$ is equal to 0 (or is an even number) and the state is at its initial value of 0, then the next state remains equal to 0. As a result, the state update may be skipped for the first transform coefficients in the scanning order, until a quantization level with non-zero value (or odd value) is found.

In another variant, when a block is coded with DepQuant, for each transform coefficient in the block, the corresponding quantization index qIdx is computed and stored during the dequantization process. Then, when the QC correction step is performed for the block, each transform coefficient may be corrected by reusing the stored quantization index qldx at the corresponding position in the block. Therefore, in this variant, the state initialization, the computation of qldx, and the state update, may be skipped during the QC correction of the block.

Adjustments of correction bound computation based on quantizer, quantization level and bound offset

According to Equation (15), correction bounds are obtained by summing the current reconstruction value $Q^{-1}(c_q)$ with the product of a bound offset $o$ and the quantization step $\Delta$. As a result, for a URQ quantizer with a constant quantization step $\Delta$ between consecutive reconstruction values, $o$ determines the position of the correction bound relatively to the reconstruction values such that integer values of $o$ correspond to a correction bound equal to the reconstruction value $Q^{-1}(c_q + o)$. More generally, any decimal value of $o$ corresponds to a correction bound equal to $\tilde{Q}^{-1}(c_q + o)$, where the function $\tilde{Q}^{-1}$ is the linear interpolation of the discrete dequantization function $Q^{-1}$. For example, considering a bound offset $o$ in the range [0,1] the corresponding correction bound is linearly interpolated between the current reconstruction value $Q^{-1}(c_q)$ (corresponding to $o = 0$) and the next one $Q^{-1}(c_q + 1)$ (corresponding to $o = 1$).

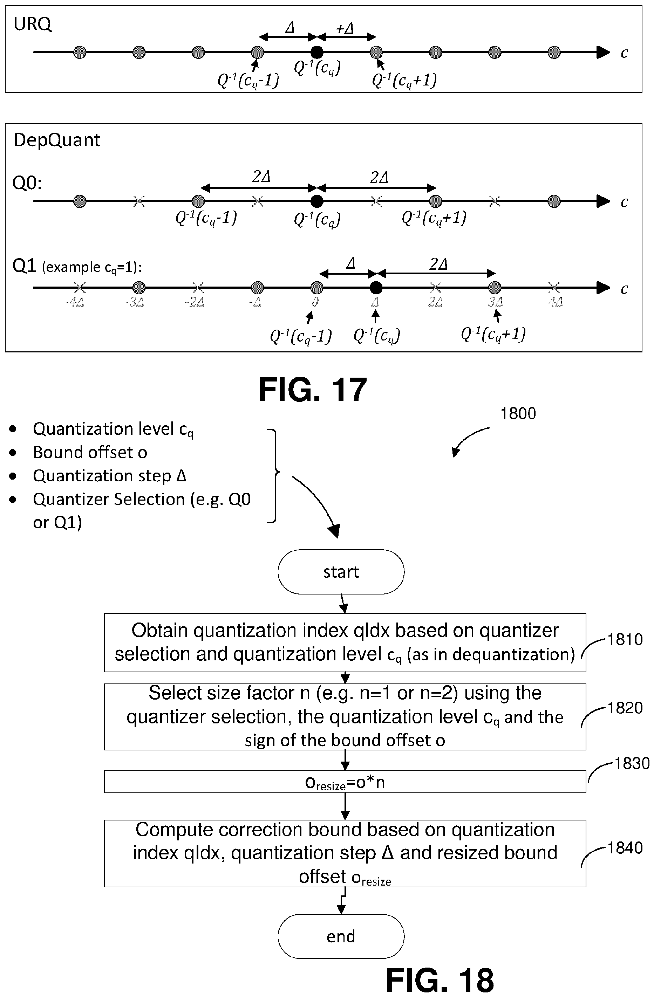

However, in DepQuant, although the distance between consecutive reconstruction values is also equal to the quantization step $\Delta$ when considering the reconstruction values of all the quantizers (e.g., Q0 and Q1), this is not the case for each quantizer taken individually, as illustrated in FIG. 17. For example, the quantizer Q0 is uniform but has a quantization step $2\Delta$. The quantizer Q1 is non-uniform with a quantization step $\Delta$ between the reconstruction values $Q^{-1}(-1)$, $Q^{-1}(0)$ and $Q^{-1}(1)$, and a quantization step $2\Delta$ otherwise. Hence, the correction bounds computation may be further adapted in order to preserve the relationship between the bound offset $o$ and the position of the corresponding correction bound relatively to the reconstruction values of the selected quantizer.

Bound offset resizing

First, we consider the case where the bound offset $o$ is in the range [-1,1]. In this case, the correction bound is expected to be between the current reconstruction value $Q^{-1}(c_q)$ and either the previous one $Q^{-1}(c_q - 1)$ if $o < 0$, or the next one $Q^{-1}(c_q + 1)$ if $o > 0$. Hence, the computation of a correction bound $b$ may be adapted as b = $Q^{-1}(c_q) + o \times n \times \Delta$, where $n \times \Delta$ is the distance between $Q^{-1}(c_q)$ and $Q^{-1}(c_q + \text{sgn}(o))$. The size factor $n$ thus depends on the quantizer selection, the quantization level $c_q$ and the sign of $o$. For example, for the DepQuant quantizers in FIG.17, $n$ may be determined as $n = 2$ if at least one of the following conditions is satisfied: "Q0 is selected", or "$abs(c_q) > 1$", or "$c_q == 1$ && $o > 0$", or "$c_q == -1$ && $o < 0$". Otherwise $n$ is equal to 1. More generally, for any scalar quantizer, the size factor $n$ may be explicitly computed as the distance between the two reconstruction values $Q^{-1}(c_q)$ and $Q^{-1}(c_q + \text{sgn}(o))$ divided by the quantization step (i.e., $n = abs(Q^{-1}(c_q) - Q^{-1}(c_q + \text{sgn}(o))) / \Delta$).

The adapted bound offset equation can now be expressed as $b = Q^{-1}(c_q) + o_{resize} \times \Delta$, using a resized bound offset $o_{resize} = o \times n$. This is equivalent to the original correction bound computation in Equation (15) where a resized bound offset $o_{resize}$ is used instead of the original bound offset $o$.

Hence in an embodiment, the computation of the correction bound is adapted by using a resized bound offset $o_{resize} = o \times n$ instead of directly using the original bound offset $o$, where the size factor $n$ is determined based on the quantizer selection, the quantization level $c_q$ and the sign of $o$.

FIG. 18 depicts a method 1800 for the computation of a correction bound according to this embodiment, given a quantization level $c_q$ (e.g., decoded from a bitstream), a bound offset $o$ (e.g., obtained with Equation (4a) or (4b)), a quantization step $\Delta$, and information indicating which quantizer is selected (e.g., state variable of DepQuant indicating if Q0 or Q1 is selected).

Similarly to FIG. 16, a quantization index qldx is obtained (1810) the same way as in the dequantization process, based on the quantizer selection and the quantization level $c_q$.

The size factor is selected (1820) based on the quantizer selection, the quantization level $c_q$, and the sign of the bound offset $o$. For example, $n$ may be determined as $n = 2$ if at least one of the following conditions is satisfied: "Q0 is selected", or "$abs(c_q) > 1$", or "$c_q == 1$ && $o > 0$", or "$c_q == -1$ && $o < 0$". Otherwise $n$ is equal to 1. The resized bound offset is then obtained (1830) as $O_{resize} = o \times n$.

Finally, the correction bound $b$ is computed (1840) based on the quantization index qldx, the quantization step $\Delta$ and the resized bound offset $o_{resize}$. For example, the correction bound may be computed directly as $b = (qldx + o_{resize}) \times \Delta$.

The computation may also be performed with integer arithmetic using the integer parameters $scale_\Delta$ and $shift_\Delta$ of the quantization step $\Delta$ (i.e., $\Delta = scale_\Delta / 2^{shift_\Delta}$) and the integer bound offset $O$ and integer shift $S$ of the bound offset $o$ (i.e.,

$o = \dfrac{O}{2^S}$ ), where $O$ and $S$ may be obtained as in FIG. 11 or FIG. 12. Assuming that the size factor $n$ is an integer, the integer parameters of the resized bound offset may be represented as $O_{resize} = O \times n$ and $S_{resize} = S$. More specifically, in the case of the quantizers Q0 and Q1 in FIG. 17, the value of the size factor $n$ is either 1 or 2. Hence, the resized bound offset may be alternatively represented with $O_{resize} = O$ and $S_{resize} = \begin{cases} S & if\ n = 1 \\ S-1 & if\ n = 2 \end{cases}$. Finally, the integer-based correction bound computation may be performed as in Equation (14), using qldx instead of $c_q$ and using the integer parameters $O_{resize}$ and $S_{resize}$ of the resized bound offset $o_{resize}$ instead of the integer parameters $O$ and $S$ of the original bound offset $o$.

## Further adjustment of the quantization index aldx and bound offset o

For the general case where the absolute value of the bound offset $abs(o)$ may be higher than 1, further adaptions may be performed in order to compute the correction bound as $b = \tilde{Q}^{-1}(c_q + o)$. For that purpose, the bound offset $o$ may be decomposed into its integer part $int(o) = \begin{cases} \lfloor o \rfloor\ if\ o > 0 \\ \lceil o \rceil\ if\ o \le 0 \end{cases}$, and its fractional part $\mathrm{frac}(o) = \begin{cases} o - \lfloor o \rfloor\ if\ o > 0 \\ o - \lceil o \rceil\ if\ o \le 0 \end{cases}$.

Using this decomposition, it can be noted that $\tilde{Q}^{-1}(c_q + o)$ is linearly interpolated between the reconstruction value $Q^{-1}(c_q + int(o))$ (corresponding to frac($o$)=0) and either the previous one if frac($o$) < 0, or the next one if frac($o$) > 0.

Using an adjusted quantization level $c_q^{adj} = c_q + \mathrm{int}(o)$ and an adjusted bound offset $o^{adj}$ = frac($o$), the correction bound $b$ can be expressed as $b = Q^{-1}\left(c_q^{adj}\right) + o^{adj} \times n \times \Delta$, where $n \times \Delta$ is the distance between $Q^{-1}\left(c_q^{adj}\right)$ and $Q^{-1}\left(c_q^{adj} + \mathrm{sgn}(o^{adj})\right)$.

Hence, in an embodiment, the computation of the correction bound is adapted by using an adjusted quantization level $c_q^{adj} = c_q + \mathrm{int}(o)$ instead of directly using the original quantization level $c_q$, and an adjusted bound offset $o^{adj}$ = frac($o$) instead of directly using the original bound offset $o$.

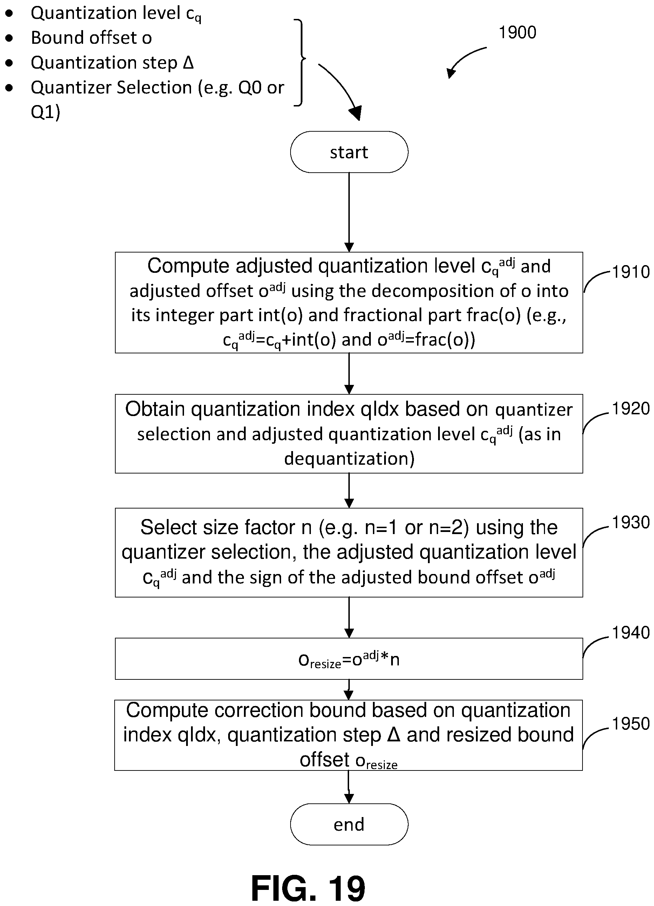

For example, FIG. 19 depicts a method 1900 for the computation of a correction bound according to this embodiment, given a quantization level $c_q$ (e.g., decoded from a bitstream), a bound offset $o$ (e.g., obtained with Equation (4a) or (4b)), a quantization step $\Delta$, and information indicating which quantizer is selected (e.g., state variable of DepQuant indicating if Q0 or Q1 is selected). The adjusted quantization level $c_q^{adj} = c_q + \mathrm{int}(o)$ and adjusted bound offsets $o^{adj}$ = frac($o$) are computed first (1910). Then, the same steps as in FIG. 18 are performed (1920, 1930, 1940, 1950) using $c_q^{adj}$ instead of the original quantization level $c_q$, and $o^{adj}$ instead of the original bound offset $o$. Note that in this case, since the quantization index qldx is obtained based on $c_q^{adj}$ instead of $c_q$, its value may be different from the quantization index used during the dequantization process.

## Case filtering difference transform coefficients

In another embodiment, the QC correction is based on the non-filtered reconstructed block $X_r$ instead of the prediction block pred as in FIG. 10. In this case, each filtering difference transform coefficient $c_f'$ is corrected using a correction bound $b'$. The general relationship between a correction bound $b'$ of a filtering difference transform coefficient and the corresponding correction bound $b$ of the transform coefficient $c_f$ is $b' = b - Q^{-1}(c_q)$ (see definition of the quantization bounds in Equation (10)).

Furthermore, in this embodiment, the adaptations of the correction bounds computation in FIG. 18 and FIG. 19 are derived from a generalized equation of the correction bound $b = \tilde{Q}^{-1}(c_q + o)$, where the function $\tilde{Q}^{-1}$ is the linear interpolation of the discrete dequantization function $Q^{-1}$. In the case of DepQuant, we thus have $b' = \tilde{Q}^{-1}(c_q + o) - Q^{-1}(c_q) = Q^{-1}(c_q + int(o)) + frac(o) \times n \times \Delta - Q^{-1}(c_q)$, where $n$ is the size factor.

If $o$ is in the range [-1,1], this simplifies into $b' = o \times n \times \Delta$. Therefore, in this case, the adaptation of the correction bound computation in FIG. 18 applies similarly for correcting a filtering difference transform coefficient $c_f'$. However, in the last step, the computation of the correction bound $b'$ is only based on the quantization step $\Delta$ and the resized bound offset $o_{resize} = o \times n$. For example, $b'$ may be directly computed as the product $o_{resize} \times \Delta$ or may be computed with integer arithmetic using Equation (14) where $num = O_{resize} * scale_\Delta$ and $shift = shift_\Delta + S_{resize}$, and where $O_{resize}$ and $S_{resize}$ are the integer parameters of the resized bound offset. Therefore, obtaining the quantization index qldx in the first step is not necessary and may be skipped.

More generally, for any value of o, we have $b' = Q^{-1}\left(c_q^{adj}\right) + o^{adj} \times n \times \Delta - Q^{-1}(c_q)$, where $c_q^{adj} = c_q + \mathrm{int}(o)$ is the adjusted quantization level and $o^{adj}$ = frac($o$) is the adjusted bound offset. Let us note qIdx_org the quantization index obtained based on the original quantization level $c_q$ and the quantizer selection, and qIdx_adj the quantization index obtained based on the adjusted quantization level $c_q^{adj}$ and the quantizer selection. Thus, we have $b' = (qIdx + o^{adj} \times n) \times \Delta$, where the quantization index is qIdx=qIdx_adj - gIdx_org. Hence for any bound offset value, the adaption of the correction bound computation illustrated in FIG. 19 applies similarly for correcting a filtering difference transform coefficient $c_f'$. However, instead of directly obtaining the quantization qIdx from the adjusted quantization level $c_q^{adj}$ (i.e., using qIdx=qIdx_adj), it is computed using both the adjusted quantization level $c_q^{adj}$ and the original quantization level $c_q$ (i.e., qIdx=qIdx_adj - qIdx_org).

The methods described herein in relation with FIG. 15-19 can be implemented in a method for encoding the image block or decoding the block. More generally, these methods can be implemented in a video encoder, for example the video encoder 200 of FIG. 2, for encoding an image or a video or in a video decoder, for example the video decoder 300 of FIG. 3, for decoding an image or a video. The QC correction process is thus implemented in a similar manner at the encoder and the decoder.

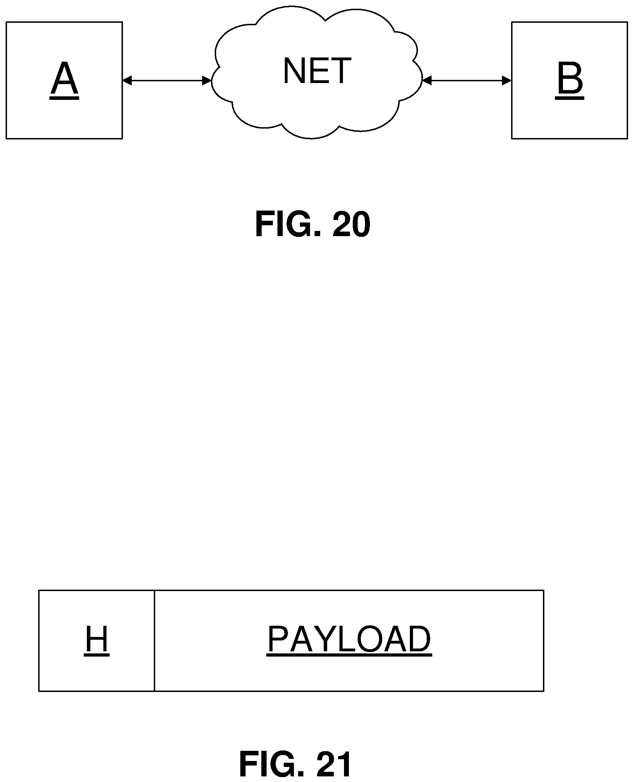

In an embodiment, illustrated in FIG. 20, in a transmission context between two remote devices A and B over a communication network NET, the device A comprises a processor in relation with memory RAM and ROM which are configured to implement a method for encoding an image or a video according to any one of the embodiments described herein and the device B comprises a processor in relation with memory RAM and ROM which are configured to implement a method for decoding an image or a video according to any one of the embodiments described herein. In accordance with an example, the network is a broadcast network, adapted to broadcast/transmit a coded video from device A to decoding devices including the device B.

FIG. 21 shows an example of the syntax of a signal transmitted over a packet-based transmission protocol. Each transmitted packet P comprises a header H and a payload PAYLOAD. In some embodiments, the payload PAYLOAD may comprise data representative of the image or video encoded according to any one of the embodiments described above. The payload can also comprise any signaling as described above.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above. One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

    i. Encoding, into coded video data, syntax elements that can enable the decoder to decode the coded video data, according to any of the embodiments described herein.

    ii. A bitstream that includes one or more of the described syntax elements, or variations thereof, whether transmitted, stored, or otherwise made available.

    iii. Creating, transmitting, receiving, and/or decoding of the bitstream.

    iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for dequantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A method comprising:

   obtaining a filtered version of a reconstructed image block determined from a prediction block and a reconstructed prediction residual;
   obtaining a quantization index of a dependent quantization for at least one transform coefficient of a transform block determined for a residual obtained from the filtered reconstructed image block,
   determining at least one correction bound based on the quantization index, a bound offset and a quantization step size of the dependent quantization,
   correcting the at least one transform coefficient as a function of the at least one correction bound providing at least one corrected transform coefficient.

2. The method of claim 1, wherein the bound offset is determined from one of a minimum bound offset or a maximum bound offset depending on a decoded quantization level obtained for a position of the at least one transform coefficient in the transform block and depending on whether the bound offset is determined for an inferior correction bound or a superior correction bound.

3. The method of claim 1 or 2, wherein the residual is obtained between the filtered reconstructed image block and the prediction block.

4. The method of claim 3, wherein the quantization index is obtained based on a decoded quantization level obtained for a position of the at least one transform coefficient in the transform block and a current state of the dependent quantization when dequantizing the decoded quantization level.

5. The method of claim 4, wherein at least one of the bound offset or the quantization step size is obtained using integer parameters.

6. The method of claim 4 or 5 , wherein the quantization index is a symmetrized quantization index associated with an absolute value of the decoded quantization level, and correcting the at least one transform coefficient as a function of the at least one correction bound comprising obtaining a symmetrized coefficient from the at least one transform coefficient and correcting the symmetrized coefficient as a function of the at least one correction bound.

7. The method of any one of claims 1-6, wherein correcting the at least one transform coefficient as a function of the at least one correction bound comprises at least one of:

   when the bound offset is determined for an inferior correction bound, setting the at least one transform coefficient to a first new value when the at least one transform coefficient is below the inferior correction bound, the first new value being above or equaling the inferior correction bound, or
   when the bound offset is determined for a superior correction bound, setting the at least one transform coefficient to a second new value when the at least one transform coefficient is above the superior correction bound, the second new value being below or equaling the superior correction bound.

8. The method of any one of claims 1-7, further comprising obtaining a corrected version of the reconstructed image block from the at least one corrected transform coefficient.

9. The method of any one of claims 1-8, wherein the method further comprises initializing a state of the dependent quantization before obtaining a quantization index for a transform coefficient of the transform block at a first scanning position, and updating the state of the dependent quantization based on a quantization level decoded for a position of the at least one transform coefficient after correcting the at least one transform coefficient.

10. The method of any of claims 4-6, wherein the bound offset is a resized bound offset obtained from a scaling of a first value of the bound offset by a size factor, wherein the size factor is determined as a distance between two reconstruction values of a quantizer of the dependent quantization selected when dequantizing the decoded quantization level divided by the quantization step size, wherein one of the two reconstruction values is a reconstruction value obtained for the decoded quantization level and another of the two reconstruction values is a reconstruction value obtained for the decoded quantization level plus a sign of the first value of the bound offset.

11. The method of any of claims 4-6, further comprising:

   determining an adjusted quantization level as a sum of the decoded quantization level and an integer part of a first value of the bound offset,
   determining an adjusted bound offset as fractional part of the first value of the bound offset,
   determining a size factor as a distance between two reconstruction values of a quantizer of the dependent quantization selected when dequantizing the decoded quantization level divided by the quantization step size, wherein one of the two reconstruction values is a reconstruction value obtained for the adjusted quantization level and another of the two reconstruction values is a reconstruction value obtained for the adjusted quantization level plus a sign of the adjusted bound offset,
   wherein the quantization index is obtained based on the adjusted quantization level, and
   wherein the at least one correction bound is determined using the quantization index, a resized bound offset obtained from a scaling of the adjusted bound offset by the size factor and the quantization step size.

12. The method of claim 1, wherein the residual is obtained between the filtered reconstructed image block and the reconstructed image block, and wherein the at least one correction bound is determined as a product of a first value of the bound offset by a size factor and the quantization step size, the size factor being determined as a distance between two reconstruction values of a quantizer of the dependent quantization selected when dequantizing a decoded quantization level obtained for a position of the at least one transform coefficient in the transform block, divided by the quantization step size, wherein one of the two reconstruction values is a reconstruction value obtained for the decoded quantization level and another of the two reconstruction values is a reconstruction value obtained for the decoded quantization level plus a sign of the first value of the bound offset.

13. The method of claim 1, wherein the residual is obtained between the filtered reconstructed image block and the reconstructed image block, and further comprising:

   determining an adjusted quantization level as a sum of a decoded quantization level obtained for a position of the at least one transform coefficient in the transform block and an integer part of a first value of the bound offset,
   determining an adjusted bound offset as fractional part of the first value of the bound offset,
   determining a size factor as a distance between two reconstruction values of a quantizer of the dependent quantization selected when dequantizing the decoded quantization level divided by the quantization step size, wherein one of the two reconstruction values is a reconstruction value obtained for the adjusted quantization level and another of the two reconstruction values is a reconstruction value obtained for the adjusted quantization level plus a sign of the adjusted bound offset,
   wherein the quantization index is obtained as a difference between a first quantization index and a second quantization index, the first quantization index being obtained from the adjusted quantization level and a current state of the dependent quantization when dequantizing the decoded quantization level and the second quantization index being obtained from the decoded quantization level and the current state of the dependent quantization when dequantizing the decoded quantization level, and
   wherein the at least one correction bound is determined using the quantization index, a resized bound offset obtained from a scaling of the adjusted bound offset by the size factor and the quantization step size.

14. The method of any one of claims 1-13, comprising encoding or decoding the image block.

15. An apparatus comprising one or more processors configured to implement the method of any one of claims 1-14.

DISPLAY DEVICE — 165

AUDIO DEVICE — 175

PERIPHERALS — 185

100

DISPLAY INTERFACE — 160

AUDIO INTERFACE — 170

PERIPHERAL INTERFACE — 180

MEMORY — 120

STORAGE DEVICE — 140

COMMUNICATION INTERFACE — 150

190

PROCESSOR — 110

115

ENCODER/ DECODER — 130

105

RF

COMP

USB

HDMI

COMMUNICATION CHANNEL

**FIG. 1**

FIG. 2

**FIG. 3**

$$c$$

$$sup(c_q)$$

$$c_r = Q^{-1}(c_q)$$

$$inf(c_q)$$

$$c$$

$$\boxed{c_q = Q(c)}$$

## FIG. 4

example for $c_q = 1$ :

$inf_Q(c_q)$    $c_r = Q^{-1}(c_q)$    $sup_Q(c_q)$

$-2\Delta$    $-\Delta$    $0$    $\Delta$    $2\Delta$    $c$

$\Delta a$    $\Delta a$    $\Delta a$    $\Delta a$

$\Delta o_{min}$    $\Delta o_{max}$

⬤ Reconstruction values $(c_r)$
▮ Quantization bounds

## FIG. 5

**FIG. 6**

**FIG. 7**

**FIG. 8**

**FIG. 9**

**FIG. 10**

- Bound offset parameters $O_0$, $S_0$, $O_1$, $S_1$
- Quantization step parameters $scale_\Delta$, $shift_\Delta$
- Quantization level $c_q$
- Transform coefficient $c_f$

start

$c_q > 0?$

no

yes

$S = S_1$
$O = -O_1$

$S = S_0$
$O = O_0$

$c_q \geq 0?$

no

yes

$S = S_0$
$O = -O_0$

$S = S_1$
$O = O_1$

Compute $b_{inf}$ (inferior correction bound associated to $c_q$) using bound offset parameters O and S

Compute $b_{sup}$ (superior correction bound associated to $c_q$) using bound offset parameters O and S

Apply correction function to the transform coefficient
$\widehat{c_f} = corr(c_f, b_{inf}, b_{sup})$

end

# FIG. 11

27

- Bound offset parameters $O_0$, $S_0$, $O_1$, $S_1$
- Quantization step parameters $scale_\Delta$, $shift_\Delta$
- Quantization level $c_q$
- Transform coefficient $c_f$

start

$c_q == 0?$

no        yes

$S_{inf} = S_0$
$O_{inf} = O_0$

$S_{inf} = S_1$
$O_{inf} = -O_1$

$S_{sup} = S_1$
$O_{sup} = O_1$

$c_q \geq 0$
?

no        yes

$c_f^{sym} = -c_f$

$c_f^{sym} = c_f$

Compute superior correction bound $b_{sup}$ associated to $abs(c_q)$ using bound offset parameters $O_{sup}$ and $S_{sup}$

Compute inferior correction bound $b_{inf}$ associated to $abs(c_q)$ using bound offset parameters $O_{inf}$ and $S_{inf}$

Apply correction function to the symmetrized transform coefficient
$$\overline{c_f^{sym}} = corr(c_f^{sym}, b_{inf}, b_{sup})$$

$c_q \geq 0?$

no        yes

$\hat{c_f} = -\overline{c_f^{sym}}$

$\hat{c_f} = \overline{c_f^{sym}}$

end

# FIG. 12

Q0

-2  -1  0  1  2

quantization
levels $c_q$

Q1

-2  -1  0  1  2

$c$

-4Δ  -3Δ  -2Δ  -Δ  0  Δ  2Δ  3Δ  4Δ

## FIG. 13

Q0

start state

$(c_q\&1)==0$

0

$(c_q\&1)==1$

1

$(c_q\&1)==1$

$(c_q\&1)==0$

$(c_q\&1)==0$

$(c_q\&1)==1$

Q1

2

$(c_q\&1)==1$

3

$(c_q\&1)==0$

| current state | next state for... | |
|---|---|---|
| | $(c_q\&1)==0$ | $(c_q\&1)==1$ |
| 0 | 0 | 2 |
| 1 | 2 | 0 |
| 2 | 1 | 3 |
| 3 | 3 | 1 |

## FIG. 14

1500

Obtaining filtered
reconstructed image block — 1510

Obtaining quantization
index for a transform
coefficient — 1520

Determining correction
bound for the transform
coefficient — 1530

Correcting the transform
coefficient — 1540

# FIG. 15

start

1600

Initialize state (same state initialization as in dequantization) ⟍1610

For each transform coefficient position in block (using same scanning order as in dequantization) ⟍1620

Obtain quantization step $\Delta$ and bound offsets (e.g., $o_{min}$, $o_{max}$) ⟍1630

Obtain quantization index qIdx based on state and quantization level $c_q$ (as in dequantization) ⟍1640

Compute at least one correction bound based on quantization index qIdx, quantization step $\Delta$ and bound offsets ⟍1650

Apply QC correction to $c_f$ based on correction bound(s) ⟍1660

Update state (same update as in dequantization) ⟍1670

end

**FIG. 16**

## URQ

## DepQuant

Q0:

Q1 (example $c_q$=1):

## FIG. 17

- Quantization level $c_q$
- Bound offset o
- Quantization step $\Delta$
- Quantizer Selection (e.g. Q0 or Q1)

1800

**start**

Obtain quantization index qIdx based on quantizer selection and quantization level $c_q$ (as in dequantization) —1810

Select size factor n (e.g. n=1 or n=2) using the quantizer selection, the quantization level $c_q$ and the sign of the bound offset o —1820

$o_{resize}=o*n$ —1830

Compute correction bound based on quantization index qIdx, quantization step $\Delta$ and resized bound offset $o_{resize}$ —1840

**end**

## FIG. 18

- Quantization level $c_q$
- Bound offset o
- Quantization step Δ
- Quantizer Selection (e.g. Q0 or Q1)

1900

start

Compute adjusted quantization level $c_q^{adj}$ and adjusted offset $o^{adj}$ using the decomposition of o into its integer part int(o) and fractional part frac(o) (e.g., $c_q^{adj}=c_q+int(o)$ and $o^{adj}=frac(o)$) — 1910

Obtain quantization index qIdx based on quantizer selection and adjusted quantization level $c_q^{adj}$ (as in dequantization) — 1920

Select size factor n (e.g. n=1 or n=2) using the quantizer selection, the adjusted quantization level $c_q^{adj}$ and the sign of the adjusted bound offset $o^{adj}$ — 1930

$o_{resize}=o^{adj}*n$ — 1940

Compute correction bound based on quantization index qIdx, quantization step Δ and resized bound offset $o_{resize}$ — 1950

end

## FIG. 19

A ↔ NET ↔ B

**FIG. 20**

| H | PAYLOAD |
|---|---------|

**FIG. 21**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | WO 2024/200011 A1 (INTERDIGITAL CE PATENT HOLDINGS SAS [FR]) 3 October 2024 (2024-10-03) | 1-9,14, 15 | INV. H04N19/126 H04N19/176 |
| A | * figures 8,9 * <br> * page 1, line 11 - line 12 * <br> * page 9, line 10 - page 11, line 3 * <br> * page 17, line 24 - page 19, line 12 * <br> ----- | 10-13 | H04N19/18 H04N19/61 H04N19/82 |
| Y,D | SCHWARZ (FRAUNHOFER) H ET AL: "CE7: Transform coefficient coding and dependent quantization (Tests 7.1.2, 7.2.1)", 11. JVET MEETING; 20180711 - 20180718; LJUBLJANA; (THE JOINT VIDEO EXPLORATION TEAM OF ISO/IEC JTC1/SC29/WG11 AND ITU-T SG.16 ), , no. JVET-K0071 11 July 2018 (2018-07-11), XP030199394, Retrieved from the Internet: URL:http://phenix.int-evry.fr/jvet/doc_end _user/documents/11_Ljubljana/wg11/JVET-K00 71-v2.zip JVET-K0071.doc [retrieved on 2018-07-11] | 1-9,14, 15 | |
| A | * section 3 * <br> ----- | 10-13 | |
| A | EP 2 334 078 A1 (PANASONIC CORP [JP]) 15 June 2011 (2011-06-15) * paragraph [0113] - paragraph [0116] * ----- | 1-15 | |

**TECHNICAL FIELDS SEARCHED (IPC)**

H04N

The present search report has been drawn up for all claims

| Place of search | Date of completion of the search | Examiner |
|---|---|---|
| Munich | 24 June 2025 | Regidor Arenales, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    ...............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 30 5151

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2025

| Patent document cited in search report | Publication date | Patent family member(s) | Publication date |
|---|---|---|---|
| WO 2024200011 A1 | 03-10-2024 | NONE | |
| EP 2334078 A1 | 15-06-2011 | EP 2334078 A1 | 15-06-2011 |
| | | WO 2011072823 A1 | 23-06-2011 |

For more details about this annex : see Official Journal of the European Patent Office, No. 12/82

**REFERENCES CITED IN THE DESCRIPTION**

**Patent documents cited in the description**

- WO 2024200011 A

**Non-patent literature cited in the description**

- **H. SCHWARZ** ; **T. NGUYEN** ; **D. MARPE** ; **T. WIEGAND**. CE7: Transform coefficient coding and dependent quantization (Tests 7.1.2, 7.2.1). *JVET-K0071*, July 2018

- **H. SCHWARZ** ; **S. SCHMIDT** ; **P. HAASE** ; **T. NGUYEN** ; **D. MARPE** ; **T. WIEGAND**. Additional support of dependent quantization with 8 states. *JVET-Q0243*, January 2020